# EUROPÄISCHE PATENTSCHRIFT

(11) **EP 1 321 346 B1**
(45) Veröffentlichungstag und Bekanntmachung des Hinweises auf die Patenterteilung: **06.09.2006**
(21) Anmeldenummer: 02028041.8
(22) Anmeldetag: 16.12.2002
(51) Int. Cl.: B62D 1/04, B62D 1/06, B62D 15/02

(54) **Lenkvorrichtung für ein Kraftfahrzeug**
Steering device for a vehicle
Dispositif de direction pour véhicule

(30) Priorität: 19.12.2001 DE 20120542 U
(43) Veröffentlichungstag der Anmeldung: 25.06.2003
(73) Patentinhaber: TRW Automotive Safety Systems GmbH, 63743 Aschaffenburg (DE)
(72) Erfinder: Hauer, Constantin, 63825 Schöllkrippen (DE); Wulf, Axel, 63743 Aschaffenburg (DE)
(74) Vertreter: Sulzbach, Werner

(56) Entgegenhaltungen:
- WO-A-01/94188
- WO-A-99/12791

## Beschreibung

Die Erfindung betrifft eine Lenkvorrichtung für ein Kraftfahrzeug, mit einem feststehenden Lenkradkranz, einem in den Lenkradkranz integrierten Meßwertgeber zur Erzeugung eines elektronischen Signals und einem in Abhängigkeit von dem elektronischen Signal ansteuerbaren Stellantrieb zur Einstellung lenkbarer Räder.

Aus Sicherheits- und Komfortgründen werden seit einiger Zeit immer mehr Einrichtungen zur Betätigung verschiedener Fahrzeugfunktionen unmittelbar im Lenkrad angeordnet, damit der Fahrer nicht mehr gezwungen ist, zur Einschaltung derartiger Funktionen eine Hand vom Lenkrad zu nehmen. Die Übertragung von an einem drehbaren Lenkrad erzeugten elektrischen Signalen auf die in der Kraftfahrzeugkarosserie ortsfest angeordneten Stellglieder ist jedoch insbesondere dann nicht unproblematisch, wenn eine Vielzahl unterschiedlicher Signale übertragen werden muß. Es wurden daher schon feststehende oder im wesentlichen feststehende Lenkvorrichtungen vorgeschlagen, bei denen die mechanische Kopplung zwischen Lenkvorrichtung und Lenkgestänge durch einen Meßwertgeber an der Lenkvorrichtung und einen Stellantrieb am Lenkgestänge ersetzt worden ist. Bei derartigen Lenkvorrichtungen kann auf die üblichen maximal zweieinhalb bis vier Umdrehungen des Lenkrads zur Erzielung des maximalen Radeinschlags verzichtet und der eigentliche Stellweg für die Betätigung der lenkbaren Räder auf einen Drehwinkel von 30° oder weniger beschränkt werden. Dadurch wird die Übertragung einer Vielzahl von Signalen unproblematisch, weil die Betätigungseinrichtungen an Teilen der Lenkvorrichtung angeordnet werden können, die relativ zur Karosserie feststehend ausgebildet sind. Die Leitungsführung zur Herstellung der elektrischen Verbindungen zwischen den Betätigungseinrichtungen und den feststehenden Teilen ist daher wesentlich vereinfacht.

Eine mechanische Entkopplung und elektrische Übertragung des Lenkbefehls an die lenkbaren Räder ist auch dann erforderlich, wenn über moderne Sicherheitssysteme eine fahrerunabhängige Fahrzeugstabilisierung erreicht und dabei auch auf den Einstellwinkel der lenkbaren Räder Einfluß genommen werden soll.

Die EP-A-1 046 572 beschreibt eine Lenkvorrichtung mit einem nicht drehbaren Gestell, das eine Symmetrieachse und bogenförmige Führungsabschnitte aufweist, einem Paar miteinander gekoppelter Handgriffe, die an den Führungsabschnitten verschiebbar gleichsinnig gelagert sind und sich längs der Führungsabschnitte und relativ zur Symmetrieachse um ein begrenztes Maß verschieben lassen, sowie einem Meßwertgeber zur Erzeugung eines elektrischen oder elektronischen Signals zur Bestimmung der Lage der Handgriffe relativ zum Gestell.

Die WO-A-99/12791 betrifft eine Lenkvorrichtung für ein Kraftfahrzeug mit einem Betätigungsorgan zur Einleitung einer Lenkbewegung und einem Lenkgestänge zur Übertragung der Lenkbewegung auf die Räder, bei der das Betätigungsorgan aus einem nicht drehbaren Lenkrad besteht, in dessen Kranz ein relativ zum Kranz beweglicher, bandförmiger oder kettenartiger Betätigungsring und ein Meßwertgeber zur Erzeugung eines elektrischen oder elektronischen Positionssignals für den Betätigungsring angeordnet sind. Das Lenkgestänge wird von einem Stellantrieb betätigt, der von einer elektrischen oder elektronischen Regeleinrichtung in Abhängigkeit von dem Positionssignal ansteuerbar ist.

Die DE 199 27 467 A1 beschreibt ein drehbares Lenkrad mit Tastelementen zur Betätigung von elektrisch ansteuerbaren Einrichtungen in einem Kraftfahrzeug, wobei die Tastelemente piezoelektrische Drucksensoren sind. Ein Teil der Drucksensoren ist in einem Aktivierungsbereich angeordnet, während die anderen Drucksensoren einen Steuerungsbereich bilden, der von dem Aktivierungsbereich abgesetzt ist. Durch die Betätigung der im Aktivierungsbereich befindlichen Drucksensoren sollen sich unterschiedliche Steuerungsfunktionen den im Steuerungsbereich angeordneten Drucksensoren zuordnen lassen.

Die WO 01/94188 A1 zeigt ein drehbares Lenkrad mit mehreren Sensoren, wobei die Sensoren über den Umfang eines Lenkrings verteilt angeordnet sind und sich über die gesamte Länge des Lenkrings erstrecken. Mit diesen Sensoren wird die Position der Hände des Fahrers auf dem Lenkrad erfaßt. Daraus wird ein unabhängiger Parameter zur Überprüfung des gemessenen Lenkwinkels und für eine aktive Regelung der Fahrstabilität abgeleitet.

Die JP-A 05-310130 offenbart ein Lenkrad mit Drucksensoren, die den Druck der das Lenkrad angreifenden Handfläche erfassen. Über die Stärke des ausgeübten Drucks soll eine bevorstehende Lenkbewegung erkannt und die Richtung der Lenkbewegung vorhergesagt werden können.

Die vorliegende Erfindung schafft eine Lenkvorrichtung, die weniger aufwendig konstruiert ist und daher günstiger gefertigt werden kann.

Erfindungsgemäß wird daher eine Lenkvorrichtung für ein Kraftfahrzeug mit einem feststehenden Lenkradkranz, einem in den Lenkradkranz integrierten Meßwertgeber zur Erzeugung eines elektrischen oder elektronischen Signals und einem in Abhängigkeit von dem elektronischen Signal ansteuerbaren Stellantrieb zur Einstellung lenkbarer Räder bereitgestellt, die dadurch gekennzeichnet ist, daß der Meßwertgeber am Umfang des Lenkradkranzes angeordnete berührungsempfindliche Sensoren umfaßt, welche die Lage und Bewegungen der den Lenkradkranz berührenden Hände aufnehmen und das der Lage und den Bewegungen der Hände entsprechende elektrische oder elektronische Signal erzeugen, und daß dem Meßwertgeber eine Elektronikeinheit zur Erfassung des Signals und Umwandlung in ein Lenksignal zur Ansteuerung des Stellantriebs zugeordnet ist. Die von den Sensoren erfaßte Lage und die Bewegungen der das Lenkrad berührenden Hände werden also in einfacher Weise in elektronische Signale umgewandelt, welche die Drehrichtung, den Drehwinkel und die Drehgeschwindigkeit des Lenkrads abbilden. Damit kann die Akzeptanz des "steering-by-wire"-Systems beim Kunden erhöht werden.

In vorteilhafter Weise sind die berührungsempfindlichen Sensoren als druckempfindliche Sensoren ausgebildet. Sie können insbesondere nach Art der von einem "Touchscreen" bzw. "Touchpad" bekannten Sensoren arbeiten. Vorzugsweise sind die berührungsempfindlichen Sensoren an der Unterseite des Lenkradkranzes, d.h. auf der dem Fahrer abgewandten Seite des nicht drehbaren Lenkrads, angeordnet. Dies schützt die Sensoren vor zufälligen Berührungen und verhindert somit ungewollte Lenkbewegungen.

Die berührungsempfindlichen Sensoren sind bevorzugt über den vollen Umfang des Lenkradkranzes verteilt angeordnet. Damit ist eine optimale Zugänglichkeit der Sensoren für den Fahrer gegeben. Die berührungsempfindlichen Sensoren können allerdings auch nur in einem Teilbereich des Lenkradkranzumfangs angeordnet sein, der dann farblich oder in anderer Weise für den Fahrer erkennbar von den übrigen Teilen des Lenkradkranzes und den gegebenenfalls darin angeordneten Betätigungseinrichtungen abgesetzt sein kann.

Die Berechnung des Lenksignals aus den von den berührungsempfindlichen Sensoren erzeugten elektrischen und elektronischen Signalen erfolgt vorzugsweise über eine in die Elektronikeinheit integrierte Software. Die Lage und Bewegungen der Hände an den berührungsempfindlichen Sensoren werden dabei ähnlich wie Drehrichtung, Drehwinkel und Drehgeschwindigkeit eines herkömmlichen Lenkrads von der Software in ein Lenksignal zur Ansteuerung des Stellantriebs der Fahrzeugräder umgewandelt. Von besonderem Vorteil ist, daß die Berechnung des Lenksignals in Abhängigkeit von der Geschwindigkeit des Fahrzeugs erfolgen kann. Damit lassen sich verschiedene Fahrsituationen berücksichtigen. Beispielsweise sollten die Bewegungen der Hände an den berührungsempfindlichen Sensoren bei einer Geradeausfahrt auf der Autobahn weniger starke Lenkbewegungen der Räder erzeugen, als im Falle des Einparkens bei niedriger Geschwindigkeit.

Besonders vorteilhaft erweist sich die feststehende Konstruktion des Lenkrads im Rückhaltefall nach einem Fahrzeugunfall, da das Lenkrad mit einem Gassack-Modul ausgestattet werden kann, das einen asymmetrischen Gassack aufweist, so daß eine bessere, an die jeweilige Unfallsituation angepaßte Rückhaltewirkung erzielt werden kann.

Die erfindungsgemäße Lenkvorrichtung weist im Vergleich zu den bekannten Lenkvorrichtungen, die ein elektronisch unterstütztes Lenken (Steering by Wire) ermöglichen, eine wesentlich einfachere Konstruktion mit weniger beweglichen Bauteilen auf und ist daher sowohl wartungsfreundlicher als auch kostengünstiger herzustellen.

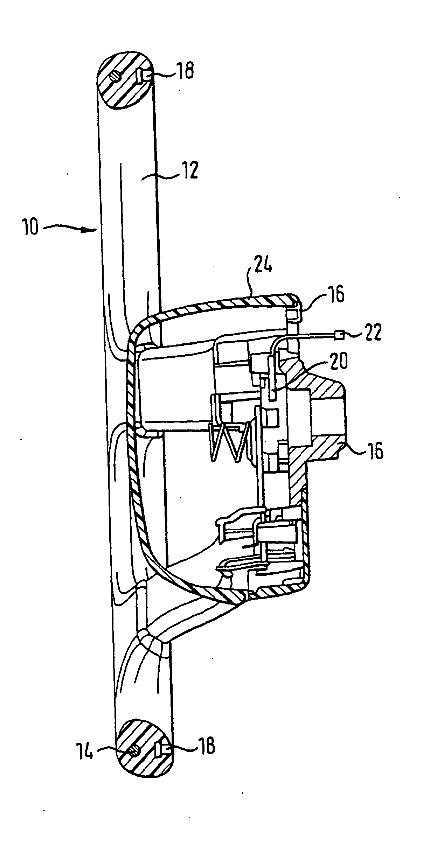

Weitere Merkmale und Vorteile der Erfindung ergeben sich aus der nachfolgenden Beschreibung einer besonderen Ausführungsform unter Bezugnahme auf die Zeichnung.

Die einzige Zeichnungsfigur zeigt die schematische Darstellung eines erfindungsgemäßen Lenkrads im Querschnitt.

Das in der Zeichnungsfigur dargestellte Lenkrad 10 weist einen Lenkradkranz 12 und ein den Lenkradkranz stabilisierendes Skelett 14 auf Über eine Befestigungseinrichtung 16 ist das Lenkrad feststehend, d.h. nicht drehbar, mit einer Halterung an der Fahrzeugkarosserie verbunden.

Bei der gezeigten Ausführungsform sind die berührungsempfindlichen Sensoren 18 an der Unterseite des Lenkradkranzes 12 angeordnet. Diese berührungsempfindlichen Sensoren können als druckempfindliche Sensoren nach Art eines "Touchscreens" oder "Touchpads", beispielsweise in Form einer druckempfindlichen Folie, ausgebildet sein und sind hier kontinuierlich über den gesamten Umfang des Lenkradkranzes verteilt. Alternativ dazu können auch lediglich Teilbereiche des Lenkradkranzes 12 mit den berührungsempfindlichen Sensoren 18 ausgestattet sein. Diese Teilbereiche sind dann vorzugsweise farblich von den übrigen Teilen des Lenkradkranzes abgesetzt.

Den berührungsempfindlichen Sensoren 18 ist eine Elektronikeinheit 20 zugeordnet, welche die von den berührungsempfindlichen Sensoren erzeugten elektrischen oder elektronischen Signale erfaßt und in ein Lenksignal zur Ansteuerung des Stellantriebs der Kraftfahrzeugräder (hier nicht gezeigt) umwandelt. Die Elektronikeinheit 20 ist demgemäß auch mit einer Schnittstelle 22 zur übrigen Fahrzeugelektronik ausgestattet. In dieser können die Lenksignale auch zur Berechnung weiterer Fahrzeugfunktionen, wie beispielsweise eines elektronischen Stabilisierungssystems, verwendet werden.

Das erfindungsgemäße Fahrzeuglenkrad 10 kann darüber hinaus noch mit einem Airbagmodul ausgerüstet sein, von dem in der Figur lediglich die Abdeckung 24 schematisch dargestellt ist. Vorzugsweise weist dieses Airbagmodul einen asymmetrischen Gassack (hier nicht dargestellt) auf

Bei der Berührung der berührungs- oder druckempfindlichen Sensoren 18 mit den Händen erzeugt der Fahrer ein elektrisches oder elektronisches Signal, welches die bekannten Lenkbewegungen eines herkömmlichen Lenkrads hinsichtlich Drehbewegung, Drehwinkel und Drehgeschwindigkeit simuliert. Dieses elektronische Signal wird an die Elektronikeinheit 20 weitergeleitet und dort, vorzugsweise mittels einer Software, in Abhängigkeit von der über weitere Sensoren erfaßten Fahrzeugschwindigkeit in ein Lenksignal umgewandelt. Dieses Lenksignal dient dann zur Ansteuerung des Stellantriebs für die lenkbaren Fahrzeugräder.

Mit der vorliegenden Erfindung ist somit ein elektronisch unterstütztes Lenken (Steering by Wire) möglich, wobei der Konstruktionsaufwand des Lenkrads aufgrund des Fehlens beweglicher Bauteile außerordentlich gering gehalten werden kann. Da das erfindungsgemäße Lenkrad nicht drehbar ist, können auch alle Zuleitungen für die weiteren im Lenkrad angeordneten Betätigungseinrichtungen problemlos mit der Fahrzeugelektronik verbunden werden. Das erfindungsgemäße Lenkrad eignet sich auch für den Einsatz in unterschiedlichen Fahrzeugtypen, da über die Software eine Anpassung an die unterschiedlichsten Fahrsituationen möglich ist. Das erfindungsgemäße Lenkrad ist aufgrund des Fehlens von beweglichen Bauteilen auch nahezu verschleißfrei und wartungsarm.

## Patentansprüche

1. Lenkvorrichtung (10) für ein Kraftfahrzeug, mit einem feststehenden Lenkradkranz (12), einem in den Lenkradkranz integrierten Meßwertgeber zur Erzeugung eines elektrischen oder elektronischen Signals und einem in Abhängigkeit von dem elektronischen Signal ansteuerbaren Stellantrieb zur Einstellung lenkbarer Räder, **dadurch gekennzeichnet, daß** der Meßwertgeber am Umfang des Lenkradkranzes angeordnete berührungsempfindliche Sensoren (18) umfaßt, welche die Lage und Bewegungen der den Lenkradkranz (12) berührenden Hände aufnehmen und das der Lage und den Bewegungen der Hände entsprechende elektrische oder elektronische Signal erzeugen, und daß dem Meßwertgeber eine Elektronikeinheit (20) zur Erfassung des Signals und Umwandlung in ein Lenksignal zur Ansteuerung des Stellantriebs zugeordnet ist.

2. Lenkvorrichtung nach Anspruch 1, **dadurch gekennzeichnet, daß** die berührungsempfindlichen Sensoren (18) als druckempfindliche Sensoren ausgebildet sind.

3. Lenkvorrichtung nach Anspruch 1 oder 2, **dadurch gekennzeichnet, daß** die berührungsempfindlichen Sensoren (18) an der Unterseite des Lenkradkranzes (12) angeordnet sind.

4. Lenkvorrichtung nach einem der Ansprüche 1 bis 3, **dadurch gekennzeichnet, daß** die berührungsempfindlichen Sensoren (18) kontinuierlich über den vollen Umfang des Lenkradkranzes (12) verteilt angeordnet sind.

5. Lenkvorrichtung nach einem der Ansprüche 1 bis 3, **dadurch gekennzeichnet, daß** die berührungsempfindlichen Sensoren (18) in einem Teilbereich des Lenkradkranzumfangs angeordnet sind.

6. Lenkvorrichtung nach einem der vorhergehenden Ansprüche, **dadurch gekennzeichnet, daß** die Elektronikeinheit (20) eine Software zur Berechnung des Lenksignals umfaßt.

7. Lenkvorrichtung nach Anspruch 6, **dadurch gekennzeichnet, daß** die Berechnung in Abhängigkeit von der Geschwindigkeit des Fahrzeugs erfolgt.

8. Lenkvorrichtung nach einem der vorhergehenden Ansprüche, **dadurch gekennzeichnet, daß** die Lenkvorrichtung ein Airbagmodul mit asymmetrischem Gassack aufweist.

## Claims

1. A steering device (10) for a motor vehicle, comprising a stationary steering wheel rim (12), a measurement transducer integrated into the steering wheel rim for generating an electric or electronic signal, and an actuator that can be actuated as a function of the electronic signal in order to adjust steerable wheels, **characterized in that** the measurement transducer includes touch-sensitive sensors (18) arranged on the circumference of the steering wheel rim, which detect the position and the movements of the hands touching the steering wheel rim (12) and generate the electric or electronic signal that corresponds to the position and the movements of the hands, and **in that** an electronic unit (20) for detecting the signal and converting it into a steering signal for controlling the actuator is associated with the measurement transducer.

2. The steering device according to Claim 1, **characterized in that** the touch-sensitive sensors (18) are configured as pressure-sensitive sensors.

3. The steering device according to Claim 1 or 2, **characterized in that** the touch-sensitive sensors (18) are arranged on the bottom of the steering wheel rim (12).

4. The steering device according to any of Claims 1 to 3, **characterized in that** the touch-sensitive sensors (18) are distributed continuously over the entire circumference of the steering wheel rim (12).

5. The steering device according to any of Claims 1 to 3, **characterized in that** the touch-sensitive sensors (18) are arranged in a partial area of the steering wheel rim circumference.

6. The steering device according to any of the preceding claims, **characterized in that** the electronic unit (20) includes a software to calculate the steering signal.

7. The steering device according to Claim 6, **characterized in that** the calculation is made as a function of the speed of the vehicle.

8. The steering device according to any of the preceding claims, **characterized in that** the steering device includes an airbag module with an asymmetrical airbag.

## Revendications

1. Dispositif de direction (10) pour un véhicule automobile, comportant une couronne de volant de direction (12) fixe, un capteur de mesure intégré dans la couronne de volant de direction pour engendrer un signai électrique ou électronique, et un mécanisme de commande pilotable en fonction du signal électronique pour le réglage de roues dirigeables, **caractérisé en ce que** le capteur de mesure comprend des capteurs (18) sensibles au toucher agencés sur la périphérie de la couronne de volant de direction, lesquels enregistrent la position et les mouvements des mains touchant la couronne de volant de direction (12) et engendrent le signal électrique ou électronique correspondant à la position et aux mouvements des mains, et **en ce qu'**au capteur de mesure est associée une unité électronique (20) pour détecter le signal et le transformer en un signal de direction pour piloter le mécanisme de commande.

2. Dispositif de direction selon la revendication 1, **caractérisé en ce que** les capteurs (18) sensibles au toucher sont réalisés sous forme de capteurs sensibles à la pression.

3. Dispositif de direction selon la revendication 1 ou 2, **caractérisé en ce que** les capteurs (18) sensibles au toucher sont agencés sur la face inférieure de la couronne de volant de direction (12).

4. Dispositif de direction selon l'une des revendications 1 à 3, **caractérisé en ce que** les capteurs (18) sensibles au toucher sont répartis de manière continue sur toute la périphérie de la couronne de volant de direction (12).

5. Dispositif de direction selon l'une des revendications 1 à 3, **caractérisé en ce que** les capteurs (18) sensibles au toucher sont agencés dans une région partielle de la périphérie de la couronne de volant de direction (12).

6. Dispositif de direction selon l'une des revendications précédentes, **caractérisé en ce que** l'unité électronique (20) comprend un logiciel pour calculer le signal de direction.

7. Dispositif de direction selon la revendication 6, **caractérisé en ce que** le calcul a lieu en fonction de la vitesse du véhicule.

8. Dispositif de direction selon l'une des revendications précédentes, **caractérisé en ce que** le dispositif de direction présente un module de coussin à gaz avec coussin à gaz asymétrique.
